# EUROPEAN PATENT APPLICATION

(11) **EP 4 216 630 A1**
(43) Date of publication of application: **26.07.2023**
(21) Application number: 20954524.3
(22) Date of filing: 24.09.2020
(51) Int. Cl.: H04W 72/04

(54) **COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Ipside
(86) International application number: PCT/CN2020/117536
(87) International publication number: WO 2022/061672

(57) **Abstract**

Embodiments of the present invention provide a communication method, a terminal device, a network device, and a computer-readable storage medium. The method is used for a network device to send a first parameter to a terminal device, and the first parameter can ensure service transmission performance. The embodiments of the present invention may comprise: a terminal device receive a first parameter sent by a network device. The first parameter comprises at least one of the following: related information of a counter corresponding to a first object, and related information of a first timer. The first object comprises at least one of a terminal device, a bearer, a quality-of-service flow, a data packet, a packet data unit session (PDU session), and a time-sensitive communication stream (TSC stream).

## Description

### TECHNICAL FIELD

The disclosure relates to the communication field, and in particular, relates to a communication method, a terminal device, a network device, and a computer-readable storage medium.

### BACKGROUND

At present, the R17 ultra-reliable and low latency communication (URLLC) project requires the radio access network (RAN) to be enhanced based on survival time. For an application or business, when the survival time is characterized by a service period, if survival time = period, after the previous packet fails to be transmitted, the next packet is required to be transmitted correctly, otherwise, the transmission of the communication service will be wrong. In other words, for an application or service, when the survival time is characterized by continuous transmission of error packets, if survival time = X consecutive transmission error packets, when X packets are continuously transmitted with errors, the communication service transmission error occurs. Therefore, when X-1 consecutive packets fail to be transmitted, the next packet must be transmitted correctly.

When the survival time cannot be satisfied, it will cause the failure of the application layer communication service. How the air interface uses the parameter of survival time to meet the transmission requirements has not yet been determined.

### SUMMARY

The disclosure provides a communication method, a terminal device, a network device, and a computer-readable storage medium used by a network device to send a first parameter to a terminal device, and the first parameter can ensure service transmission performance.

In the first aspect, an embodiment of the disclosure provides a communication method, and the method includes the following. A terminal device receives a first parameter sent by a network device. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

In the second aspect, an embodiment of the disclosure provides a communication method, and the method includes the following. A network device sends a first parameter to a terminal device. The first parameter is used by the terminal device to trigger a first behavior. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

In another aspect, an embodiment of the disclosure provides a terminal device featuring a function of the terminal device determining at least one of a configured grant (CG) resource usage mode, a CG resource configuration mode, or a CG resource configuration parameter according to the first environment and/or configuration authorization CG resource configuration information. The function may be implemented through hardware and may also be implemented through hardware by executing corresponding software. The hardware or software includes one or multiple modules corresponding to the function.

In another aspect, an embodiment of the disclosure provides a network device featuring a function of a terminal device determining at least one of a CG resource usage mode, a CG resource configuration mode, or a CG resource configuration parameter according to the first environment and/or configuration authorization CG resource configuration information. The function may be implemented through hardware and may also be implemented through hardware by executing corresponding software. The hardware or software includes one or multiple modules corresponding to the function.

In still another aspect, an embodiment of the disclosure provides a terminal device including a memory storing an executable program code and a processor coupled to the memory. The processor is configured to correspondingly execute the method provided in the first aspect of an embodiment of the disclosure.

In still another aspect, an embodiment of the disclosure provides a network device including a memory storing an executable program code and a transceiver coupled to the memory. The transceiver is configured to execute the method provided in the second aspect of an embodiment of the disclosure.

In still another aspect, an embodiment of the disclosure provides a computer-readable storage medium including an instruction. When running on a computer, the computer-readable storage medium causes the computer to execute the method provided in the first aspect or in the second aspect.

In still another aspect, an embodiment of the disclosure provides a computer program product including an instruction. When running on a computer, the computer program product enables the computer to execute the method provided in the first aspect or in the second aspect.

In still another aspect, an embodiment of the disclosure provides a chip. The chip is coupled to the memory in the terminal device, so that the chip calls the program instruction stored in the memory during operation to enable the terminal device to execute the method provided in the first aspect.

In still another aspect, an embodiment of the disclosure provides a chip. The chip is coupled to the memory in the network device, so that the chip calls the program instruction stored in the memory during operation to enable the network device to execute the method provided in the second aspect.

In the technical solutions provided in the embodiments of the disclosure, the network device sends the first parameter to the terminal device, and the first parameter can ensure service transmission performance. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream). The terminal device determines the triggering of the first behavior based on the first parameter, and then the network device makes adjustments to ensure service transmission requirements and at the same time ensure that the network device controls the behavior of the terminal device.

### BRIEF DESCRIPTION OF THE DRAWINGS

FIG. 1 is a system architecture diagram of a communication system applied in an embodiment of the disclosure.
FIG. 2 is a schematic diagram of an embodiment of a communication method according to an embodiment of the disclosure.
FIG. 3 is a schematic diagram of an embodiment of a communication method according to another embodiment of the disclosure.
FIG. 4 is a schematic view of an embodiment of a terminal device according to an embodiment of the disclosure.
FIG. 5 is a schematic view of an embodiment of a network device according to an embodiment of the disclosure.
FIG. 6 is a schematic view of another embodiment of the terminal device according to an embodiment of the disclosure.
FIG. 7 is a schematic view of another embodiment of the network device according to an embodiment of the disclosure.

### DESCRIPTION OF THE EMBODIMENTS

Description will now be made in detail to describe the technical solutions of the disclosure, examples of which are illustrated in the accompanying drawings. Nevertheless, the disclosed embodiments are merely part of the embodiments of the disclosure, not all the embodiments. Based on the embodiments of the disclosure, all other embodiments obtained by a person having ordinary skill in the art without making any inventive effort fall within the scope that the disclosure seeks to protect.

At present, with the pursuit of speed, latency, high-speed mobility, energy efficiency, and diversity and complexity of services in future life, the 3GPP international standards organization thus began the development of 5G. The main application scenarios of 5G are: enhance mobile broadband (eMBB), ultra-reliable and low latency communication (URLLC), and massive machine type of communication (mMTC).

The current definition of survival time is as follows:
The survival time is sent to the base station together with time sensitive communication assistance information (TSCAI).

Survival Time is specified by the application function (AF) in units of "time" with the timescale corresponding to burst periodicity or as the maximum number of consecutive message transmission failures where a message is a single burst comprising a single packet/frame or an aggregated set of packets/frames and a transmission failure occurs when the Packet Delay Budget requirement corresponding to the message is not satisfied.

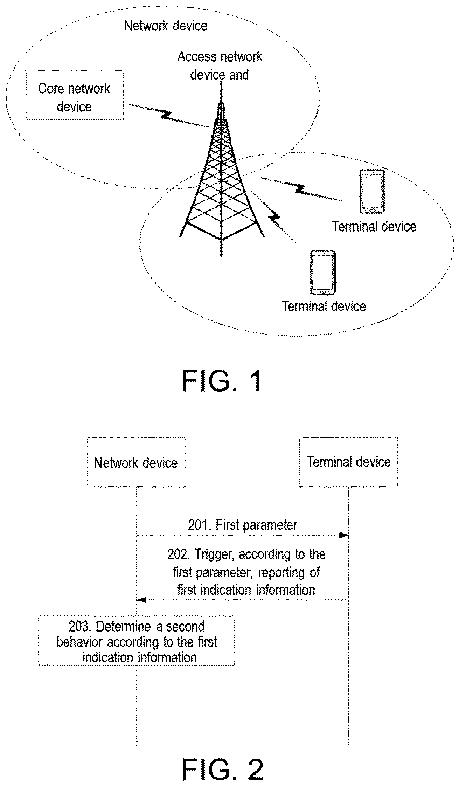

As shown in FIG. 1, it is a system architecture diagram of a communication system applied in an embodiment of the disclosure. The communication system may include a network device, and the network device may be a device communicating with terminal devices (or referred to as communication terminals or terminals). The network device may provide communication coverage for a specific geographic area and may communicate with terminal devices located in this coverage area. FIG. 1 schematically illustrates one network device and two terminal devices, and optionally, the communication system may include a plurality of network devices, and the coverage area of each network device may include other numbers of terminal devices, which is not limited in the embodiments of the disclosure. Optionally, the communication system may further include other network entities such as a network controller, a mobility management entity, etc., which are not limited in the embodiments of the disclosure.

In the embodiments of the disclosure, various embodiments are described in together with network devices and terminal devices. Herein, the "terminal device" includes but not limited to user equipment (UE), an access terminal, a user unit, a user station, a mobile station, a mobile platform, a remote station, a remote terminal, a mobile device, a user terminal, a terminal, a wireless communication device, a user agent, or a user device.

The terminal device may be a station (ST) in a WLAN, may be a cellular phone, a cordless phone, a session initiation protocol (SIP) phone, a wireless local loop (WLL) station, a personal digital assistant (PDA), a handheld device with wireless communication functions, a computing device or other processing devices connected to a wireless modem, a vehicle-mounted device, a wearable device, a terminal device in a next-generation communication system such as an NR network, or a terminal device in a public land mobile network (PLMN) that will evolve in the future.

In the embodiments of the disclosure, the terminal devices may be deployed on land, including indoor or outdoor, handheld, wearable or vehicle-mounted, may be deployed on water (e.g., ships, etc.), and may also be deployed in the air (e.g., aircraft, balloons, satellites, etc.).

In the embodiments of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, and so on.

As an example but not a limitation, in this embodiment of the disclosure, the terminal device may also be a wearable device. The wearable device may also be called a wearable smart device, which is a general term for applying wearable technology to intelligently design daily wear and develop wearable devices, such as glasses, gloves, watches, clothing, and shoes. The wearable device is a portable device that is worn directly on the body or integrated into the user's clothing or accessories. The wearable device is not only a hardware device, but also implements powerful functions through software support, data interaction, and cloud interaction. Wearable smart devices in a broad sense include full-featured, large-sized devices that can achieve complete or partial functions without relying on smartphones, such as smart watches or smart glasses, and those that only focus on a certain type of application functions and need to be used together with other devices such as smartphones, for example, various smart bracelets for physical sign monitoring, smart jewelry, etc.

Herein, the network device may further include access network device and core network device. That is, the wireless communication system also includes a plurality of core networks for communicating with an access network device. The access network device may be an evolutional base station (evolutional node B, referred to as eNB or e-NodeB), a macro base station, a micro base station (also called "small cell"), a pico base station, an access point (AP), a transmission point (TP), or a new generation base station (new generation Node B, gNodeB) in a long-term evolution (LTE) system, a next generation (mobile communication system) (next radio, NR) system, or an authorized auxiliary access long-term evolution (LAA-LTE) system.

In the embodiments of the disclosure, the network device may be a device configured to communicate with a mobile device, and the network device may be an access point (AP) in a WLAN, a base transceiver station (BTS) in GSM or CDMA, a base station (NodeB, NB) in WCDMA, an evolutional base station (evolutional Node B, eNB, or eNodeB) in LTE, a relay station, an access point, a vehicle-mounted device, a wearable device, a network device (gNB) in a NR network, a network device in a future evolved PLMN network, or a network device in a NTN network.

As an example but not a limitation, in this embodiment of the disclosure, the network device may have a mobile feature, for example, the network device may be a mobile device. Optionally, the network device may be a satellite or a balloon station. For instance, the satellite may be a low earth orbit (LEO) satellite, a medium earth orbit (MEO) satellite, a geostationary orbit (GEO) satellite, a high elliptical orbit (HEO) satellite, and the like. Optionally, the network device may also be a base station installed on land, water, and other locations.

In the embodiments of the disclosure, the network device may provide a service for a cell. The terminal device communicates with the network device through transmission resources (e.g., frequency domain resources or spectrum resources) used by the cell. The cell may be a cell corresponding to a network device (e.g., a base station), and the cell may belong to a macro base station and may also belong to a base station corresponding to a small cell. The small cell herein may include a metro cell, a micro cell, a pico cell, a femto cell. These small cells feature small coverage and low transmission power and are suitable for providing high-speed data transmission services.

It should be understood that a device with a communication function in the network/system in the embodiments of the disclosure may be referred to as a communication device. Taking the communication system shown in FIG. 1 as an example, the communication device may include the network device and the terminal devices having communication functions. The network device and the terminal devices may be the specific devices described in the embodiments of the disclosure, and description thereof is not repeated herein. The communication device may also include other devices in the communication system, such as other network entities such as a network controller and a mobility management entity, which are not limited in the embodiments of the disclosure.

The technical solutions provided in the embodiments of the disclosure may be applied to various communication systems, such as the global system of mobile communication (GSM) system, the code division multiple access (CDMA) system, the wideband code division multiple access (WCDMA) system, the general packet radio service (GPRS) system, the long term evolution (LTE) system, the advanced long term evolution (LTE-A) system, the new radio (NR) system, the evolution system of NR system, the LTE-based access to unlicensed spectrum (LTE-U) system, the NR-based access to unlicensed spectrum (NR-U) system, the non-terrestrial network (NTN) system, the universal mobile telecommunication system (UMTS), the wireless local area network (WLAN), the wireless fidelity (WiFi), the 5th-generation (5G) system, or other communication systems.

Generally, a conventional communication system supports only a limited number of connections and may be easily implemented. However, with the development of communication technologies, mobile communication systems are required to support not only conventional communication, but also, for example, device to device (device to device, D2D) communication, machine to machine (M2M) communication, machine type communication (MTC), vehicle to vehicle (V2V) communication, or vehicle to everything (V2X) communication, etc. The embodiments of the disclosure may also be applied to these communication systems.

In the embodiments of the disclosure, the communication system may be applied to a carrier aggregation (CA) scenario, a dual connectivity (DC) scenario, and a standalone (SA) network deployment scenario.

The technical solutions of the disclosure will be further described in the form of embodiments below. In the embodiments of the disclosure, a network device may send a first parameter to a terminal device. The first parameter may be used by the terminal device to trigger a first behavior. Herein, the first behavior may include reporting at least one of first indication information and a specific behavior. The first behavior including reporting the first indication information and the specific behavior will be described separately below.

As shown in FIG. 2, which is a schematic diagram of an embodiment of a communication method according to an embodiment of the disclosure, and the method may include the following.

In 201, the network device sends the first parameter to the terminal device, and the first parameter is used by the terminal device to trigger a first behavior.

The terminal device receives the first parameter sent by the network device, and the first parameter is used by the terminal device to trigger the first behavior. Herein, the first behavior includes reporting the first indication information. The first parameter includes at least one of the following: related information of a counter corresponding to a first object and related information of a first timer corresponding to the first object. The first object includes at least one of a terminal device, a bearer (data radio bearer, DRB), a quality-of-service flow, a data packet, a packet data unit session (PDU session), and a time-sensitive communication stream (TSC stream). It can be understood that the time-sensitive communication steam may also be called a time-sensitive service stream.

It can be understood that the first object is an object corresponding to a first identifier, and the first identifier may include at least one of a terminal device identifier, a bearer identifier, a quality-of-service flow identifier, a data packet identifier, a packet data unit session (PDU session) identifier, and a TSC stream identifier.

Optionally, the related information of the counter includes at least one of the following: an initial value of the counter and a maximum threshold. The related information of the first timer includes a time period of the first timer. It can be understood that the initial value of the counter is generally 0, is configured as 0, or is predefined (as agreed in the protocol) as 0.

Optionally, the related information of the counter and the related information of the first timer are determined by the network device according to at least one of survival time and a data delay (packet delay budget). It can be understood that the maximum threshold of the counter and/or the time period of the first timer may be determined by the network device according to at least one of the survival time and the data delay.

Optionally, the terminal device receiving the first parameter sent by the network device includes but not limited to the following implementation.
(1) The terminal device receives the first parameter sent by the network device through first dedicated information, and the first dedicated information includes radio resource control (RRC), a medium access control control element (MAC CE), or downlink control information (DCI).
(2) Alternatively, the terminal device receives the first parameter sent by the network device in a broadcast, unicast, or multicast manner.

In 202, the terminal device triggers reporting of the first indication information according to the first parameter.

Optionally, the first indication information includes indication information of at least one object, and the first object includes the at least one object. That is, the at least one object may include: the terminal device, one or multiple bearers, one or multiple quality-of-service flows, one or multiple data packets, one or multiple PDU sessions, or one or multiple TSC streams.

Optionally, the at least one object is at least one object corresponding to at least one identifier, and the first identifier includes the at least one identifier. That is, the at least one identifier may include: the terminal device, one or multiple bearer identifiers, one or multiple quality-of-service flow identifiers, one or multiple data packet identifiers, one or multiple PDU session identifiers, or one or multiple TSC stream identifiers.

Optionally, at least one object may be the same as or may be different from the first object.

Optionally, the terminal device triggering the reporting the first indication information according to the first parameter may include: the terminal device triggers reporting of the first indication information through second dedicated information according to the first parameter. The second dedicated information includes radio resource control (RRC), a medium access control control element (MAC CE), or uplink control information (UCI).

Optionally, the method may further include the following. The terminal device receives the first information sent by the network device, and the terminal device determines to trigger the first behavior according to the first parameter according to the first information.

The terminal device receiving the first information sent by the network device may include but not limited to the following implementation.
(1) The terminal device receives the first information sent by the network device through dedicated information, and the dedicated information includes radio resource control (RRC), a medium access control control element (MAC CE), or downlink control information (DCI).
(2) Alternatively, the terminal device receives the first information sent by the network device in a broadcast, unicast or multicast manner.

Optionally, the terminal device triggering the first behavior according to the first parameter may include the following.

The terminal device reports the first indication information to the network device when a current value of the counter is greater than or equal to the maximum threshold, and the first indication information is used by the network device to determine a second behavior.

It can be understood that the first indication information may be used to indicate that the transmission fails, the transmission is about to fail, or there is a problem in the transmission. Such problems occur mainly because the transmission conditions do not meet the predetermined conditions, for example: the transmission conditions are not satisfied, the quality of service cannot be guaranteed, the survival time is not satisfied, the signal quality cannot be guaranteed, the service transmission is about to fail, the service transmission is about to be temporarily suspended, and so on.

Optionally, the method may also include the following. The terminal device controls the counter to add 1 and/or turn on or restart the first timer when a first data packet transmission error is present or is determined.

Optionally, the presence or determination of the first data packet transmission error may include but not limited to the following implementation.

The terminal device receives indication information of a data packet transmission error, or receives indication information of a retransmission schedule, or does not receive response acknowledgement (ACK) indication information but a second timer expires, or receives negative acknowledgement (NACK) indication information of the first data packet before the second timer expires, or receives the indication information of the retransmission schedule of the first data packet before the second timer expires, or no data packet is transmitted correctly or successfully within a predetermined time period (e.g., within one service period), and the first data packet transmission error is determined. Exemplarily, if no data packet is transmitted correctly or successfully within one service period, it is counted as a counter+1, then, within N service periods, if no data packet is correctly or successfully transmitted, the counter increases by N.

It can be understood that the time period of the second timer may be pre-configured or indicated by the network device.

Optionally, the second timer may be discardTimer.

Optionally, the method also includes at least one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 by the terminal device when the first timer is reset;
stopping the first timer and/or resetting the counter to 0 by the terminal device when the counter is reset; and
performing at least one of stopping the first timer, stopping the second timer, and resetting the counter to 0 by the terminal device when the second timer is rest.

For instance, for an object, determination is made to determine whether to trigger reporting of the first indication information. An example of the determination process is provided as follows.

If there is a data packet transmission error, the counter is increased by 1, and/or the first timer is turned on or restarted. Optionally, according to the packet transmission error indication from the network side/lower layer, whether a retransmission schedule is received, or the internal implementation of the UE, it is determined whether a data packet is transmitted incorrectly.

If the counter is greater than or equal to the maximum threshold, the UE reports the first indication information to the network device. The first indication information is configured to indicate transmission failure/transmission condition not satisfied/QoS not guaranteed/survival time not satisfied, etc.

If the first timer expires (that is, there is no data packet transmission error during the running of the first timer), there is a correctly transmitted data packet during the running of the first timer, there is a correctly transmitted data packet during the period when the counter is greater than 0 but less than the maximum threshold, or the reconfigured first timer/counter meets the maximum threshold/the network device instructs to reset the counter, the UE performs at least one of the following: stop the first timer and reset the counter to 0.

In 203, the network device determines a second behavior according to the first indication information.

Optionally, the second behavior includes adjusting a transmission behavior, such as activating duplicate transmission, activating a larger duplicate transmission leg, using a larger number of repeated transmissions, etc.

Optionally, the second behavior includes a specific behavior, and the specific behavior includes but not limited to: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Exemplarily, after receiving the first indication information, the network device may determine subsequent actions, such as adjusting the transmission configuration, etc., to obtain a second parameter, and then may resend the second parameter to the terminal device. Herein, the second parameter may include related information of a counter corresponding to a second object and related information of a first timer corresponding to the second object, and the second object includes at least one of a terminal device, a bearer, a packet data unit session (PDU session), a TSC stream, and a quality-of-service flow. Optionally, the second parameter is different from the first parameter.

In the embodiments of the disclosure, the network device sends the first parameter to the terminal device, and the first parameter can ensure service transmission performance. The terminal device determines whether to trigger the reporting based on the first parameter, and then the network device makes adjustments to ensure service transmission requirements and at the same time ensure that the network device controls the behavior of the terminal device.

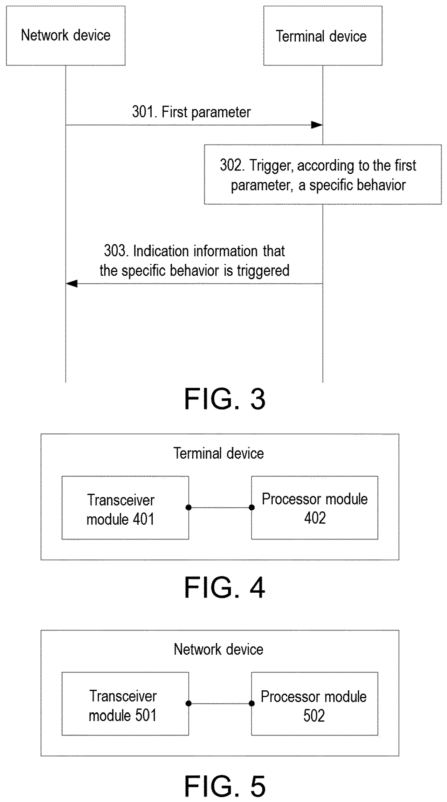

As shown in FIG. 3, which is a schematic diagram of an embodiment of a communication method according to an embodiment of the disclosure, and the method may include the following.

In 301, a network device sends a first parameter to a terminal device, and the first parameter is used by the terminal device to trigger a first behavior.

The terminal device receives the first parameter sent by the network device, and the first parameter is used by the terminal device to trigger the first behavior. Herein, the first parameter includes at least one of the following: related information of a counter corresponding to a first object and related information of a first timer corresponding to the first object. The first object includes at least one of a terminal device, a bearer (data radio bearer, DRB), a quality-of-service flow, a data packet, a packet data unit session (PDU session), and a TSC stream. It can be understood that the time-sensitive communication steam may also be called a time-sensitive service stream.

It can be understood that the first object is an object corresponding to a first identifier, and the first identifier may include at least one of a terminal device identifier, a bearer identifier, a quality-of-service flow identifier, a data packet identifier, a packet data unit session (PDU session) identifier, and a TSC stream identifier.

Optionally, the related information of the counter includes at least one of the following: an initial value of the counter and a maximum threshold. The related information of the first timer includes a time period of the first timer. It can be understood that the initial value of the counter is generally 0, is configured as 0, or is predefined (as agreed in the protocol) as 0.

Optionally, the related information of the counter and the related information of the first timer are determined by the network device according to at least one of survival time and a data delay (packet delay budget). It can be understood that the maximum threshold of the counter and/or the time period of the first timer may be determined by the network device according to at least one of the survival time and the data delay.

Optionally, the terminal device receiving the first parameter sent by the network device includes but not limited to the following implementation.
(1) The terminal device receives the first parameter sent by the network device through first dedicated information, and the first dedicated information includes radio resource control (RRC), a medium access control control element (MAC CE), or downlink control information (DCI).
(2) Alternatively, the terminal device receives the first parameter sent by the network device in a broadcast, unicast, or multicast manner.

Herein, the first behavior includes a specific behavior, and the specific behavior includes but not limited to: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Optionally, the used transmission parameter may also be referred to as used, appropriate, and reliable transmission parameter and may include at least one of a used modulation and coding scheme (MCS), the number of times of used repeated transmission, or the number of times of used duplicate transmission.

Optionally, the used transmission parameter is adjusted by the terminal device or is pre-configured or instructed by the network device.

Optionally, the activated duplicate transmission mode is a terminal device level, a quality-of-service flow level, or a data packet level.

Optionally, the activated duplicate transmission mode which is the terminal device level, the quality-of-service flow level, or the data packet level and is pre-configured or instructed by the network device.

Optionally, the first parameter includes at least one of the following: related information of a counter corresponding to a first object and related information of a first timer corresponding to the first object. The first object includes at least one of a terminal device, a bearer (data radio bearer, DRB), a quality-of-service flow, a data packet, a packet data unit session (PDU session), and a TSC stream.

It can be understood that the first object is an object corresponding to a first identifier, and the first identifier may include at least one of a terminal device identifier, a bearer identifier, a quality-of-service flow identifier, a data packet identifier, a packet data unit session (PDU session) identifier, and a TSC stream identifier.

Optionally, the related information of the counter includes at least one of the following: an initial value of the counter and a maximum threshold. The related information of the first timer includes a time period of the first timer. It can be understood that the initial value of the counter is generally 0.

Optionally, the related information of the counter and the related information of the first timer are determined by the network device according to at least one of survival time and a data delay (packet delay budget). It can be understood that the maximum threshold of the counter and/or the time period of the first timer may be determined by the network device according to at least one of the survival time and the data delay.

Optionally, the terminal device receiving the first parameter sent by the network device includes but not limited to the following implementation.
(1) The terminal device receives the first parameter sent by the network device through first dedicated information, and the first dedicated information includes radio resource control (RRC), a medium access control control element (MAC CE), or downlink control information (DCI).
(2) Alternatively, the terminal device receives the first parameter sent by the network device in a broadcast, unicast, or multicast manner.

In 302, the terminal device triggers a specific behavior according to the first parameter.

Optionally, the terminal device triggers the specific behavior when a current value of the counter is greater than or equal to the maximum threshold.

Optionally, the first parameter further includes related information of a third timer. The method further includes the following. The third timer is turned on when the terminal device triggers the specific behavior, and the terminal device resumes a third behavior before the specific behavior when the third timer expires. That is, the third timer is configured to restore the UE behavior before the specific behavior is triggered.

Optionally, the method further includes the following. The third timer is restarted when the terminal device triggers the specific behavior during the running of the third timer.

Optionally, the method may further include the following. The terminal device receives the first information sent by the network device, and the terminal device determines to trigger the first behavior according to the first parameter according to the first information.

The terminal device receiving the first information sent by the network device may include but not limited to the following implementation.
(1) The terminal device receives the first information sent by the network device through dedicated information, and the dedicated information includes radio resource control (RRC), a medium access control control element (MAC CE), or downlink control information (DCI).
(2) Alternatively, the terminal device receives the first information sent by the network device in a broadcast, unicast or multicast manner.

Optionally, the method may also include the following. The terminal device controls the counter to add 1 and/or turn on or restart the first timer when a first data packet transmission error is present or is determined.

Optionally, the presence or determination of the first data packet transmission error may include but not limited to the following implementation.

The terminal device receives indication information of a data packet transmission error, or receives indication information of a retransmission schedule, or does not receive response acknowledgement (ACK) indication information but a second timer expires, or receives negative acknowledgement (NACK) indication information of the first data packet before the second timer expires, or receives the indication information of the retransmission schedule of the first data packet before the second timer expires, or no data packet is transmitted correctly or successfully within a predetermined time period (e.g., within one service period), and the first data packet transmission error is determined. Exemplarily, if no data packet is transmitted correctly or successfully within one service period, it is counted as a counter+1, then, within N service periods, if no data packet is correctly or successfully transmitted, the counter increases by N.

It can be understood that the time period of the second timer may be pre-configured or indicated by the network device.

Optionally, the second timer may be discardTimer.

Optionally, the method also includes at least one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 by the terminal device when the counter is reset; stopping the first timer and/or resetting the counter to 0 by the terminal device when the first timer is reset; and
performing at least one of stopping the first timer, stopping the third timer, and resetting the counter to 0 by the terminal device when the third timer is rest.

For instance, for an object, determination is made to determine whether to trigger a specific behavior. An example of the determination process is provided as follows.

If there is a data packet transmission error, the counter is increased by 1, and/or the first timer is turned on or restarted. Optionally, according to the packet transmission error indication from the network side/lower layer, whether a retransmission schedule is received, or the internal implementation of the UE, it is determined whether a data packet is transmitted incorrectly.

If the counter is greater than or equal to the maximum threshold, the UE performs a specific behavior, and the specific behavior is used to guarantee the QoS requirement or survival time of service transmission.

If the first timer expires (that is, there is no data packet transmission error during the running of the first timer), there is a correctly transmitted packet during the running of the first timer, there is a correctly transmitted packet during the period when the counter is greater than 0 but less than the maximum threshold, or the reconfigured first timer/maximum threshold/the network device instructs to reset the counter, the UE performs at least one of the following: stop the first timer and reset the counter to 0.

If there is a third timer, when the UE performs a specific behavior, the UE turns on the third timer. When the third timer expires, the UE returns to the original behavior state. Optionally, if the UE triggers the first behavior again during the running of the third timer, the third timer may be restarted.

For instance, before triggering a specific behavior, the terminal device performs transmission according to an existing reliable transmission parameter or a first reliable transmission parameter. For instance, the first reliable transmission parameter may include: an appropriate MCS, an appropriate number of times of repeated transmission, or an appropriate number of times of duplicate transmission. When the specific behavior is triggered, the UE adjusts the appropriate reliable transmission parameter. It is considered that the logical channel (LCH) of the service that will not meet the service transmission requirement (for example, the service transmission will not meet the survival time requirement) or the LCH of the service that triggers the first condition, can be transmitted by using a second reliable transmission parameter. For instance, the second reliable transmission parameter may include: an appropriate MCS, an appropriate number of times of repeated transmission, or an appropriate number of times of duplicate transmission. The second reliable transmission parameter may be pre-configured or indicated by the base station.

For example, duplicate transmission is deactivated before the specific behavior is triggered. When the specific behavior is triggered, the terminal device transmits using the duplicate transmission activation mode. It is considered that the LCH of the service that will not meet the service transmission requirement (for example, the service transmission will not meet the survival time requirement) or the LCH of the service that triggers the first condition, activates the duplicate transmission. The activated duplicate transmission may be the UE level, the DRB basic, the Qos flow level, or the packet level. Optionally, which level to use can also be pre-configured or indicated by the network device.

In 303, the terminal device sends indication information that the specific behavior is triggered to the network device.

Optionally, the terminal device sending the indication information that the specific behavior is triggered to the network device may include: the terminal device sends the indication information that the specific behavior is triggered to the network device through a second dedicated information. The second dedicated information includes radio resource control (RRC), a medium access control control element (MAC CE), or uplink control information (UCI).

It can be understood that, after performing a specific behavior, the terminal device may also instruct a corresponding behavior change to the network device. For instance, the terminal device may instruct to trigger duplicate transmission.

In the embodiments of the disclosure, the network device sends the first parameter to the terminal device, and the terminal device performs a transmission adaptive adjustment scheme according to the first parameter. In this embodiment of the method, it is more flexible, and further, the time delay waiting for the adjustment of the network device is reduced. The behavior of terminal device is not fully controlled by the network device. It should be noted that the embodiment shown in FIG. 2 and the embodiment shown in FIG. 3 may also be implemented in combination, and the formed solutions are also within the protection scope of the disclosure, and description thereof is not repeated herein.

In the embodiments combining FIG. 2 and FIG. 3, optionally, when resetting the third timer, the terminal device performs at least one of stopping the first timer, stopping the third timer, and resetting the counter to 0. Optionally, when resetting the second timer, the terminal device performs at least one of stopping the first timer, stopping the second timer, stopping the third timer, and resetting the counter to 0.

As shown in FIG. 4, which is a schematic view of an embodiment of a terminal device according to an embodiment of the disclosure, and the device may include: a transceiver module 401 configured for receiving a first parameter sent by a network device.

The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

Optionally, the terminal device may further include: a processor module 402 configured for triggering a first behavior according to the first parameter.

Optionally, the first behavior may include: reporting at least one of first indication information and a specific behavior. Herein, the specific behavior includes: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Optionally, the used transmission parameter includes: at least one of a used modulation and coding scheme (MCS), the number of times of used repeated transmission, or the number of times of used duplicate transmission.

Optionally, the used transmission parameter is adjusted by the terminal device or is pre-configured or instructed by the network device.

Optionally, the activated duplicate transmission mode is a terminal device level, a quality-of-service flow level, or a data packet level.

Optionally, the activated duplicate transmission mode which is the terminal device level, the quality-of-service flow level, or the data packet level is pre-configured or instructed by the network device.

Optionally, the related information of the counter includes at least one of the following: an initial value of the counter and a maximum threshold. The related information of the first timer includes a time period of the first timer.

Optionally, the related information of the counter and the related information of the first timer are determined by the network device according to at least one of survival time and a data delay.

Optionally, the processor module 402 is configured to specifically trigger the transceiver module to report the first indication information to the network device when a current value of the counter is greater than or equal to the maximum threshold, and the first indication information is used by the network device to determine a second behavior.

Optionally, the first indication information includes indication information of at least one object, and the first object includes the at least one object.

Optionally, the first object is an object corresponding to a first identifier, the at least one object is at least one object corresponding to at least one identifier, and the first identifier includes the at least one identifier.

Optionally, the processor module 402 is specifically configured for triggering the specific behavior when a current value of the counter is greater than or equal to the maximum threshold.

Optionally, the first parameter further includes related information of a third timer.

The processor module 402 is further configured for turning on the third timer when triggering the specific behavior and resuming a third behavior before the specific behavior when the third timer expires.

Optionally, the processor module 402 is configured for restarting the third timer when triggering the specific behavior during the running of the third timer.

Optionally, the transceiver module 401 is further configured for sending indication information that the specific behavior is triggered to the network device.

Optionally, the processor module 402 is further configured for controlling the counter to add 1 and/or turn on or restart the first timer when a first data packet transmission error is present or is determined.

Optionally, the processor module 402 is specifically configured for determining the first data packet transmission error when receiving indication information of a data packet transmission error, or receiving indication information of a retransmission schedule, or not receiving response ACK indication information but a second timer expires, or receiving NACK indication information of the first data packet before the second timer expires, or receiving the indication information of the retransmission schedule of the first data packet before the second timer expires, or no data packet is transmitted correctly or successfully within a predetermined time period.

Optionally, the processor module 402 is further configured for performing at least one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 when the first timer is reset;
stopping the first timer and/or resetting the counter to 0 when the counter is reset;
performing at least one of stopping the first timer, stopping the third timer, and resetting the counter to 0 when the third timer is rest; and
performing at least one of stopping the first timer, stopping the second timer, stopping the third timer, and resetting the counter to 0 when the second timer is rest.

Optionally, the transceiver module 401 is specifically configured for receiving the first parameter sent by the network device through dedicated information, and the dedicated information includes radio resource control (RRC), a medium access control control element (MAC CE), or downlink control information (DCI).

Alternatively, the transceiver module 401 is specifically configured for receiving the first parameter sent by the network device in a broadcast, unicast, or multicast manner.

Optionally, the transceiver module 401 is further configured for receiving first information sent by the network device.

The processor module 402 is further configured for determining to trigger the first behavior according to the first parameter according to the first information.

Optionally, the transceiver module 401 is specifically configured for receiving the first information sent by the network device through dedicated information, and the dedicated information includes radio resource control (RRC), a medium access control control element (MAC CE), or downlink control information (DCI).

Alternatively, the transceiver module 401 is specifically configured for receiving the first information sent by the network device in a broadcast, unicast, or multicast manner.

As shown in FIG. 5, which is a schematic view of an embodiment of a network device according to an embodiment of the disclosure, and the device may include: a transceiver module 501 configured for sending a first parameter to a terminal device.

The first parameter is used by the terminal device to trigger a first behavior. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

Optionally, the first behavior may include: reporting at least one of first indication information and a specific behavior. Herein, the specific behavior includes: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Optionally, the used transmission parameter includes: at least one of a used modulation and coding scheme (MCS), the number of times of used repeated transmission, or the number of times of used duplicate transmission.

Optionally, the used transmission parameter is adjusted by the terminal device or is pre-configured or instructed by the network device.

Optionally, the activated duplicate transmission mode is a terminal device level, a quality-of-service flow level, or a data packet level.

Optionally, the activated duplicate transmission mode which is the terminal device level, the quality-of-service flow level, or the data packet level is pre-configured or instructed by the network device.

Optionally, the related information of the counter includes at least one of the following: an initial value of the counter and a maximum threshold. The related information of the first timer includes a time period of the first timer.

Optionally, the related information of the counter and the related information of the first timer are determined by the network device according to at least one of survival time and a data delay.

Optionally, the network device further includes: a processor module 502.

The transceiver module 501 is further configured for receiving the first indication information reported by the terminal device.

The processor module 502 is configured for determining a second behavior according to the first indication information.

Optionally, the transceiver module 501 is further configured for receiving indication information that the specific behavior is triggered sent by the terminal device.

Optionally, the transceiver module 501 is specifically configured for sending the first parameter to the terminal device through dedicated information, and the dedicated information includes radio resource control (RRC), a medium access control control element (MAC CE), or downlink control information (DCI).

Alternatively, the transceiver module 501 is specifically configured for sending the first parameter to the terminal device in a broadcast, unicast, or multicast manner.

Optionally, the transceiver module 501 is further configured for sending first information to the terminal device, and the first information is used by the terminal device to determine to trigger the first behavior according to the first parameter.

Optionally, the transceiver module 501 is specifically configured for sending the first information to the terminal device through dedicated information, and the dedicated information includes radio resource control (RRC), a medium access control control element (MAC CE), or downlink control information (DCI).

Alternatively, the transceiver module 501 is specifically configured for sending the first information to the terminal device in a broadcast, unicast, or multicast manner.

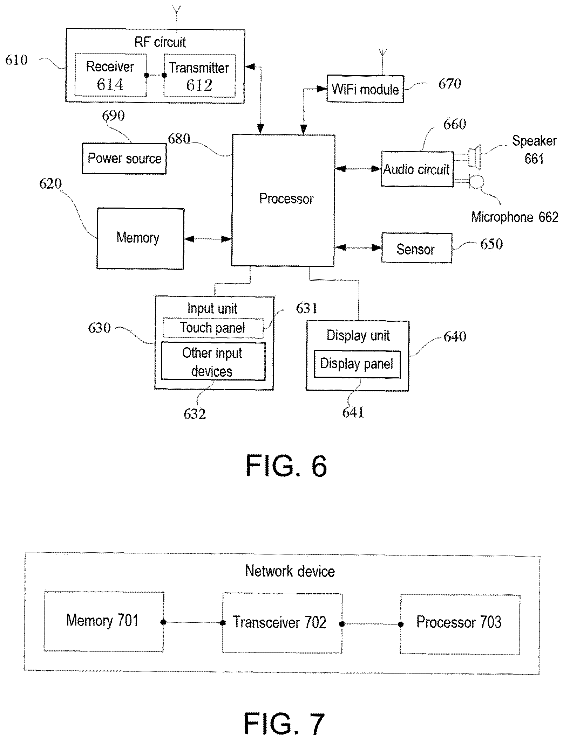

Corresponding to at least one method in the foregoing embodiments that is applied to a terminal device, the embodiments of the disclosure further provides one or multiple types of terminal devices. The terminal device in the embodiments of the disclosure may implement any implementation in the foregoing method. As shown in FIG. 6, which is a schematic view of another embodiment of a terminal device according to an embodiment of the disclosure. The terminal device is illustrated by taking a mobile phone as an example, and the device may include: a radio frequency (RF) circuit 610, a memory 620, an input unit 630, a display unit 640, a sensor 650, an audio circuit 660, a wireless fidelity (WiFi) module 670, a processor 680, a power source 690, and other components. Herein, the radio frequency circuit 610 includes a receiver 614 and a transmitter 612. A person having ordinary skill in the art can understand that the structure of the mobile phone shown in FIG. 6 does not constitute a limitation to the mobile phone and may include more or less components than shown in the figure, or some components may be combined, or a different arrangement of components may be included.

The components of the mobile phone are specifically introduced below together with FIG. 6.

The RF circuit 610 can be used for sending and receiving information or receiving and sending signals during a call. In particular, the RF circuit 610 transmits the downlink information of the base station to the processor 680 for processing after receiving the downlink information and also sends the designed uplink data to the base station. Generally, the RF circuit 610 includes but not limited to an antenna, at least one amplifier, a transceiver, a coupler, a low noise amplifier (LNA), a duplexer, and the like. In addition, the RF circuit 610 may also communicate with networks and other devices via wireless communication. The above wireless communication can use any communication standard or protocol, including but not limited to global system of mobile communication (GSM), general packet radio service (GPRS), code division multiple access (CDMA), wideband code division multiple access (WCDMA), long term evolution (LTE), email, short messaging service (SMS), etc.

The memory 620 can be used to store software programs as well as modules. The processor 680 executes various functional applications and data processing of the mobile phone by running software programs and modules stored in the memory 620. The memory 620 may mainly include a storage program area and a storage data area. The storage program area can store an operating system, an application program required by at least one function (e.g., a sound playing function, an image playing function, etc.), and the like, and the storage data area can store data created according to the use of the mobile phone (e.g., audio data, phonebook, etc.) and the like. Besides, the memory 620 may include a high-speed random access memory and may also include a non-volatile memory, such as at least one magnetic disk storage device, flash memory device, or other volatile solid-state storage devices.

The input unit 630 can be used to receive input numbers or character information and generate key signal input related to user settings and function control of the mobile phone. Specifically, the input unit 630 may include a touch panel 631 and other input devices 632. The touch panel 631 is also referred to as a touch screen, can collect touch operations of the user on or near it (e.g., the user uses any suitable object or accessory such as a finger or a stylus to operate on the touch panel 631 or near the touch panel 631), and drives the corresponding connection device according to a predetermined program. Optionally, the touch panel 631 may include two parts, a touch detection device and a touch controller. Herein, the touch detection device detects the orientation of the user's touch, detects the signal brought by the touch operation, and transmits the signal to the touch controller. The touch controller receives touch information from the touch detection device, converts it into contact coordinates, and then sends it to the processor 680, and can receive and execute commands sent by the processor 680. In addition, the touch panel 631 can be implemented in various types such as resistive, capacitive, infrared, and surface acoustic wave. In addition to the touch panel 631, the input unit 630 may also include other input devices 632. To be specific, the other input devices 632 may include but not limited to one or more of a physical keyboard, a function key (e.g., a volume control key, a switch key, etc.), a trackball, a mouse, a joystick, and the like.

The display unit 640 may be used to display information input by or provided to the user and various menus of the mobile phone. The display unit 640 may include a display panel 641, and optionally, the display panel 641 may be configured in the form of a liquid crystal display (LCD) or an organic light-emitting diode (OLED) and the like. Further, the touch panel 631 can cover the display panel 641. When the touch panel 631 detects a touch operation on or near it, it transmits the touch operation to the processor 680 to determine the type of the touch event, and then the processor 680 provides corresponding visual output on the display panel 641 according to the type of the touch event. In FIG. 6, the touch panel 631 and the display panel 641 are used as two independent components to implement the input and input functions of the mobile phone, but in some embodiments, the touch panel 631 can be integrated with the display panel 641 to implement the input and output functions of the mobile phone.

The mobile phone may also include at least one sensor 650, such as a light sensor, motion sensor, and other sensors. Specifically, the light sensor may include an ambient light sensor and a proximity sensor. Herein, the ambient light sensor can adjust the brightness of the display panel 641 according to the brightness of the ambient light, and the proximity sensor can turn off the display panel 641 and/or the backlight when the mobile phone is moved to the ear. As a type of motion sensor, an accelerometer sensor can detect the magnitude of acceleration in all directions (usually three axes). , When stationary, the accelerometer sensor detects the magnitude and direction of gravity and can be used to identify mobile phone posture applications (e.g., horizontal and vertical screen switching, related games, magnetometer posture calibration), vibration recognition related functions (e.g., pedometer, tapping), etc. The mobile phone can also be equipped with other sensors such as a gyroscope, a barometer, a hygrometer, a thermometer, and an infrared sensor, but description thereof is not provided herein.

The audio circuit 660, a speaker 661, and a microphone 662 can provide an audio interface between the user and the mobile phone. The audio circuit 660 can transmit the electrical signal converted from the received audio data to the speaker 661, and the speaker 661 converts it into an audio signal for output. On the other hand, the microphone 662 converts the collected sound signal into an electrical signal, which is converted into audio data after being received by the audio circuit 660. After the audio data is outputted to and processed by the processor 680, the RF circuit 610 is used to send the audio data to another mobile phone, or the audio data is output to the memory 620 for further processing.

WiFi is a short-distance wireless transmission technology. Through the WiFi module 670, the mobile phone can help the user to send and receive e-mail, browse the web and access streaming media, etc., which provides the user with wireless broadband Internet access. FIG. 6 shows the WiFi module 670, but it can be understood that it is not an essential component of the mobile phone and can be completely omitted as required without changing the essence of the disclosure.

The processor 680 is the control center of the mobile phone, uses various interfaces and lines to connect various parts of the entire mobile phone, and executes various functions of the mobile phone and processes data by running or executing software programs and/or modules stored in the memory 620 and calling data stored in the memory 620, so as to monitor the mobile phone as a whole. Optionally, the processor 680 may include one or multiple processing units. Preferably, the processor 680 can integrate an application processor and a modem processor. Herein, the application processor mainly deals with the operating system, user interface, and application programs, etc., and the modem processor mainly deals with wireless communication. It can be understood that the foregoing modem processor may not be integrated into the processor 680.

The mobile phone also includes a power source 690 (e.g., a battery) for powering various components. Preferably, the power source can be logically connected to the processor 680 through a power management system, so as to implement functions such as management of charging, discharging, and power consumption management through the power management system. Although not shown, the mobile phone may also include a camera, a Bluetooth module, etc., and description thereof is not provided herein.

In the embodiments of the disclosure, the radio frequency circuit 610 is configured for receiving a first parameter sent by a network device. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

Optionally, the processor 680 is configured for triggering a first behavior according to the first parameter.

Optionally, the first behavior may include: reporting at least one of first indication information and a specific behavior. Herein, the specific behavior includes: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Optionally, the used transmission parameter includes: at least one of a used modulation and coding scheme (MCS), the number of times of used repeated transmission, or the number of times of used duplicate transmission.

Optionally, the used transmission parameter is adjusted by the terminal device or is pre-configured or instructed by the network device.

Optionally, the activated duplicate transmission mode is a terminal device level, a quality-of-service flow level, or a data packet level.

Optionally, the activated duplicate transmission mode which is the terminal device level, the quality-of-service flow level, or the data packet level is pre-configured or instructed by the network device.

Optionally, the related information of the counter includes at least one of the following: an initial value of the counter and a maximum threshold. The related information of the first timer includes a time period of the first timer.

Optionally, the related information of the counter and the related information of the first timer are determined by the network device according to at least one of survival time and a data delay.

Optionally, the processor 680 is configured to specifically trigger the radio frequency circuit 610 to report the first indication information to the network device when a current value of the counter is greater than or equal to the maximum threshold, and the first indication information is used by the network device to determine a second behavior.

Optionally, the first indication information includes indication information of at least one object, and the first object includes the at least one object.

Optionally, the first object is an object corresponding to a first identifier, the at least one object is at least one object corresponding to at least one identifier, and the first identifier includes the at least one identifier.

Optionally, the processor 680 is specifically configured for triggering the specific behavior when a current value of the counter is greater than or equal to the maximum threshold.

Optionally, the first parameter further includes related information of a third timer.

The processor 680 is further configured for turning on the third timer when triggering the specific behavior and resuming a third behavior before the specific behavior when the third timer expires.

Optionally, the processor 680 is configured for restarting the third timer when triggering the specific behavior during the running of the third timer.

Optionally, the radio frequency circuit 610 is further configured for sending indication information that the specific behavior is triggered to the network device.

Optionally, the processor 680 is further configured for controlling the counter to add 1 and/or turn on or restart the first timer when a first data packet transmission error is present or is determined.

Optionally, the processor 680 is specifically configured for determining the first data packet transmission error when the terminal device receives indication information of a data packet transmission error, or receives indication information of a retransmission schedule, or does not receive response ACK indication information but a second timer expires, or receive NACK indication information of the first data packet before the second timer expires, or receive the indication information of the retransmission schedule of the first data packet before the second timer expires, or no data packet is transmitted correctly or successfully within a predetermined time period.

Optionally, the processor 680 is further configured for performing at least one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 when the first timer is reset;
stopping the first timer and/or resetting the counter to 0 when the counter is reset;
performing at least one of stopping the first timer, stopping the third timer, and resetting the counter to 0 when the third timer is rest; and
performing at least one of stopping the first timer, stopping the second timer, stopping the third timer, and resetting the counter to 0 when the second timer is rest.

Optionally, the radio frequency circuit 610 is specifically configured for receiving the first parameter sent by the network device through dedicated information, and the dedicated information includes radio resource control (RRC), a medium access control control element (MAC CE), or downlink control information (DCI).

Alternatively, the radio frequency circuit 610 is specifically configured for receiving the first parameter sent by the network device in a broadcast, unicast, or multicast manner.

Optionally, the radio frequency circuit 610 is further configured for receiving first information sent by the network device.

The processor 680 is further configured for determining to trigger the first behavior according to the first parameter according to the first information.

Optionally, the radio frequency circuit 610 is specifically configured for receiving the first information sent by the network device through dedicated information, and the dedicated information includes radio resource control (RRC), a medium access control control element (MAC CE), or downlink control information (DCI).

Alternatively, the radio frequency circuit 610 is specifically configured for receiving the first information sent by the network device in a broadcast, unicast, or multicast manner.

As shown in FIG. 7, which is a schematic view of another embodiment of a network device according to an embodiment of the disclosure, and the device may include: a memory 701 and a transceiver 702.

The memory 701 is used for an executable program code.

The transceiver 702 configured for sending a first parameter to a terminal device. The first parameter is used by the terminal device to trigger a first behavior. The first parameter includes at least one of the following: related information of a counter corresponding to a first object and related information of a first timer. The first object includes at least one of a terminal device, a bearer, a quality-of-service flow, a data packet, a packet data unit session (PDU session), and a time-sensitive communication stream (TSC stream).

Optionally, the first behavior may include: reporting at least one of first indication information and a specific behavior. Herein, the specific behavior includes: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

Optionally, the used transmission parameter includes: at least one of a used modulation and coding scheme (MCS), the number of times of used repeated transmission, or the number of times of used duplicate transmission.

Optionally, the used transmission parameter is adjusted by the terminal device or is pre-configured or instructed by the network device.

Optionally, the activated duplicate transmission mode is a terminal device level, a quality-of-service flow level, or a data packet level.

Optionally, the activated duplicate transmission mode which is the terminal device level, the quality-of-service flow level, or the data packet level is pre-configured or instructed by the network device.

Optionally, the related information of the counter includes at least one of the following: an initial value of the counter and a maximum threshold.

The related information of the first timer includes a time period of the first timer.

Optionally, the related information of the counter and the related information of the first timer are determined by the network device according to at least one of survival time and a data delay.

Optionally, the network device further includes: a processor 703.

The transceiver 702 is further configured for receiving the first indication information reported by the terminal device.

The processor 703 is configured for determining a second behavior according to the first indication information.

Optionally, the transceiver 702 is further configured for receiving indication information that the specific behavior is triggered sent by the terminal device.

Optionally, the transceiver 702 is specifically configured for sending the first parameter to the terminal device through dedicated information, and the dedicated information includes radio resource control (RRC), a medium access control control element (MAC CE), or downlink control information (DCI).

Alternatively, the transceiver 702 is specifically configured for sending the first parameter to the terminal device in a broadcast, unicast, or multicast manner.

Optionally, the transceiver 702 is further configured for sending first information to the terminal device, and the first information is used by the terminal device to determine to trigger the first behavior according to the first parameter.

Optionally, the transceiver 702 is specifically configured for sending the first information to the terminal device through dedicated information, and the dedicated information includes radio resource control (RRC), a medium access control control element (MAC CE), or downlink control information (DCI).

Alternatively, the transceiver 702 is specifically configured for sending the first information to the terminal device in a broadcast, unicast, or multicast manner.

All or part of the foregoing embodiments may be implemented by software, hardware, firmware, or any combination thereof. When implementation is performed by using software, it may be implemented in whole or in part in the form of a computer program product. The computer program product includes one or multiple computer instructions. When the computer program instructions are loaded and executed on the computer, the processes or functions according to the embodiments of the disclosure will be generated in whole or in part. The computer can be a general purpose computer, a special purpose computer, a computer network, or other programmable apparatuses. The computer instruction may be stored in, or transmitted from, one computer-readable storage medium to another computer-readable storage medium. For instance, the computer instruction may be transmitted from one website, computer, server, or data center to another website, computer, server, or data center by wired (e.g., coaxial cable, optical fiber, digital subscriber line (DSL)) or wireless (e.g., infrared, wireless, microwave, etc.) means. The computer-readable storage medium may be any available medium that can be stored by a computer or a data storage device such as a server or a data center integrated with one or more available media. The available medium may be a magnetic medium (e.g., a floppy disk, a hard disk, or a magnetic tape), an optical medium (e.g., DVD), or a semiconductor medium (e.g., a solid state disk (SSD)).

In the disclosure, the terms "first", "second", "third", "fourth" (if present), etc. in the specification, claims, and accompanying drawings, are used to distinguish similar objects and are not necessarily to describe a specific order or sequence. It is to be understood that the terms so used are interchangeable under appropriate circumstances such that the embodiments described herein can be practiced in sequences other than those illustrated or described herein. Furthermore, the terms "comprising" and "having", as well as any variations thereof, are intended to cover a non-exclusive inclusion. For instance, a process, method, system, product, or apparatus comprising a series of steps or units is not necessarily limited to those steps or units explicitly listed, but may include other steps or units not explicitly listed or inherent to the process, method, product, or apparatus.

## Claims

1. A communication method, **characterized by** comprising:
receiving, by a terminal device, a first parameter sent by a network device, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

2. The method according to claim 1, **characterized in that** the method further comprises:
triggering, by the terminal device, a first behavior according to the first parameter.

3. The method according to claim 2, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting a duplicate transmission mode.

4. The method according to claim 3, **characterized in that** the used transmission parameter comprises: at least one of a used modulation and coding scheme (MCS), the number of times of used repeated transmission, or the number of times of used duplicate transmission.

5. The method according to claim 3 or 4, **characterized in that** the used transmission parameter is adjusted by the terminal device or is pre-configured or instructed by the network device.

6. The method according to any one of claims 3 to 5, **characterized in that** the activated duplicate transmission mode is a terminal device level, a quality-of-service flow level, or a data packet level.

7. The method according to claim 6, **characterized in that** the activated duplicate transmission mode which is the terminal device level, the quality-of-service flow level, or the data packet level is pre-configured or instructed by the network device.

8. The method according to any one of claims 1 to 7, **characterized in that**
the related information of the counter comprises at least one of the following: an initial value of the counter and a maximum threshold, and
the related information of the first timer comprises a time period of the first timer.

9. The method according to any one of claims 1 to 8, **characterized in that** the related information of the counter and the related information of the first timer are determined by the network device according to at least one of survival time and a data delay.

10. The method according to any one of claims 1 to 9, **characterized in that** triggering, by the terminal device, the first behavior according to the first parameter comprises:
reporting, by the terminal device, the first indication information to the network device when a current value of the counter is greater than or equal to the maximum threshold, wherein the first indication information is used by the network device to determine a second behavior.

11. The method according to claim 10, **characterized in that** the first indication information comprises indication information of at least one object, and the first object comprises the at least one object.

12. The method according to claim 11, **characterized in that** the first object is an object corresponding to a first identifier, the at least one object is at least one object corresponding to at least one identifier, and the first identifier comprises the at least one identifier.

13. The method according to any one of claims 1 to 9, **characterized in that** triggering, by the terminal device, the first behavior according to the first parameter comprises:
triggering, by the terminal device, the specific behavior when a current value of the counter is greater than or equal to the maximum threshold.

14. The method according to claim 13, **characterized in that** the first parameter further comprises related information of a third timer, and the method further comprises:
turning on the third timer when the terminal device triggers the specific behavior; and
resuming, by the terminal device, a third behavior before the specific behavior when the third timer expires.

15. The method according to claim 14, **characterized in that** the method further comprises:
restarting the third timer when the terminal device triggers the specific behavior during the running of the third timer.

16. The method according to any one of claims 13 to 15, **characterized in that** the method further comprises:
sending, by the terminal device, indication information that the specific behavior is triggered to the network device.

17. The method according to any one of claims 10 to 16, **characterized in that** the method further comprises:
controlling, by the terminal device, the counter to add 1 and/or turn on or restart the first timer when a first data packet transmission error is present or is determined.

18. The method according to claim 17, **characterized in that** the presence or determination of the first data packet transmission error comprises:
receiving, by the terminal device, indication information of a data packet transmission error, or receiving, by the terminal device, indication information of a retransmission schedule, or not receiving, by the terminal device, response acknowledgement (ACK) indication information but a second timer expires, or receiving, by the terminal device, negative acknowledgement (NACK) indication information of the first data packet before the second timer expires, or receiving, by the terminal device, the indication information of the retransmission schedule of the first data packet before the second timer expires; or no data packet being transmitted correctly or successfully within a predetermined time period, and the first data packet transmission error being determined.

19. The method according to any one of claims 13 to 15, **characterized in that** the method further comprises at least one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 by the terminal device when the first timer is reset;
stopping the first timer and/or resetting the counter to 0 by the terminal device when the counter is reset;
performing at least one of stopping the first timer, stopping the third timer, and resetting the counter to 0 by the terminal device when the third timer is rest; and
performing at least one of stopping the first timer, stopping the second timer, stopping the third timer, and resetting the counter to 0 by the terminal device when the second timer is rest.

20. The method according to any one of claims 1 to 19, **characterized in that** the receiving, by the terminal device, the first parameter sent by the network device comprises:
receiving, by the terminal device, the first parameter sent by the network device through dedicated information, wherein the dedicated information comprises radio resource control (RRC), medium access control control element (MAC CE), or downlink control information (DCI); or
receiving, by the terminal device, the first parameter sent by the network device in a broadcast, unicast, or multicast manner.

21. The method according to any one of claims 1 to 20, **characterized in that** the method further comprises:
receiving, by the terminal device, first information sent by the network device; and
determining, by the terminal device, to trigger the first behavior according to the first parameter according to the first information.

22. The method according to claim 21, **characterized in that** the receiving, by the terminal device, the first information sent by the network device comprises:
receiving, by the terminal device, the first information sent by the network device through the dedicated information, wherein the dedicated information comprises radio resource control (RRC), medium access control control element (MAC CE), or downlink control information (DCI); or
receiving, by the terminal device, the first information sent by the network device in a broadcast, unicast or multicast manner.

23. A communication method, **characterized by** comprising:
sending, by a network device, a first parameter to a terminal device, wherein the first parameter is used by the terminal device to trigger a first behavior, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

24. The method according to claim 23, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

25. The method according to claim 24, **characterized in that** the used transmission parameter comprises: at least one of a used modulation and coding scheme (MCS), the number of times of used repeated transmission, or the number of times of used duplicate transmission.

26. The method according to claim 24 or 25, **characterized in that** the used transmission parameter is adjusted by the terminal device or is pre-configured or instructed by the network device.

27. The method according to any one of claims 24 to 26, **characterized in that** the activated duplicate transmission mode is a terminal device level, a quality-of-service flow level, or a data packet level.

28. The method according to claim 27, **characterized in that** the activated duplicate transmission mode which is the terminal device level, the quality-of-service flow level, or the data packet level is pre-configured or instructed by the network device.

29. The method according to any one of claims 23 to 28, **characterized in that**
the related information of the counter comprises at least one of the following: an initial value of the counter and a maximum threshold, and
the related information of the first timer comprises a time period of the first timer.

30. The method according to any one of claims 23 to 29, **characterized in that** the related information of the counter and the related information of the first timer are determined by the network device according to at least one of survival time and a data delay.

31. The method according to any one of claims 23 to 30, **characterized in that** the method further comprises:
receiving, by the network device, the first indication information reported by the terminal device; and
determining, by the network device, a second behavior according to the first indication information.

32. The method according to any one of claims 23 to 30, **characterized in that** the method further comprises:
receiving, by the network device, indication information that the specific behavior is triggered sent by the terminal device.

33. The method according to any one of claims 23 to 32, **characterized in that** sending, by the network device, the first parameter to the terminal device comprises:
sending, by the network device, the first parameter to the terminal device through dedicated information, wherein the dedicated information comprises radio resource control (RRC), medium access control control element (MAC CE), or downlink control information (DCI); or
sending, by the network device, the first parameter to the terminal device in a broadcast, unicast, or multicast manner.

34. The method according to any one of claims 23 to 33, **characterized in that** the method further comprises:
sending, by the network device, first information to the terminal device, wherein the first information is used by the terminal device to determine to trigger the first behavior according to the first parameter.

35. The method according to claim 34, **characterized in that** sending, by the network device, the first information to the terminal device comprises:
sending, by the network device, the first information to the terminal device through the dedicated information, wherein the dedicated information comprises radio resource control (RRC), medium access control control element (MAC CE), or downlink control information (DCI); or
sending, by the network device, the first information to the terminal device in a broadcast, unicast, or multicast manner.

36. A terminal device, **characterized by** comprising:
a transceiver module, configured for receiving a first parameter sent by a network device, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

37. The terminal device according to claim 36, **characterized in that** the terminal device further comprises:
a processor module, configured for triggering a first behavior according to the first parameter.

38. The terminal device according to claim 37, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

39. The terminal device according to claim 38, **characterized in that** the used transmission parameter comprises: at least one of a used modulation and coding scheme (MCS), the number of times of used repeated transmission, or the number of times of used duplicate transmission.

40. The terminal device according to claim 38 or 39, **characterized in that** the used transmission parameter is adjusted by the terminal device or is pre-configured or instructed by the network device.

41. The terminal device according to any one of claims 38 to 40, **characterized in that** the activated duplicate transmission mode is a terminal device level, a quality-of-service flow level, or a data packet level.

42. The terminal device according to claim 41, **characterized in that** the activated duplicate transmission mode which is the terminal device level, the quality-of-service flow level, or the data packet level is pre-configured or instructed by the network device.

43. The terminal device according to any one of claims 36 to 42, **characterized in that**
the related information of the counter comprises at least one of the following: an initial value of the counter and a maximum threshold, and
the related information of the first timer comprises a time period of the first timer.

44. The terminal device according to any one of claims 36 to 43, **characterized in that** the related information of the counter and the related information of the first timer are determined by the network device according to at least one of survival time and a data delay.

45. The terminal device according to any one of claims 36 to 44, **characterized in that**
the processor module is specifically configured for triggering the transceiver module to report the first indication information to the network device when a current value of the counter is greater than or equal to the maximum threshold, wherein the first indication information is used by the network device to determine a second behavior.

46. The terminal device according to claim 45, **characterized in that** the first indication information comprises indication information of at least one object, and the first object comprises the at least one object.

47. The terminal device according to claim 46, **characterized in that** the first object is an object corresponding to a first identifier, the at least one object is at least one object corresponding to at least one identifier, and the first identifier comprises the at least one identifier.

48. The terminal device according to any one of claims 36 to 44, **characterized in that**
the processor module is specifically configured for triggering the specific behavior when a current value of the counter is greater than or equal to the maximum threshold.

49. The terminal device according to claim 48, **characterized in that** the first parameter further comprises related information of a third timer,
the processor module is further configured for turning on the third timer when triggering the specific behavior and resuming a third behavior before the specific behavior when the third timer expires.

50. The terminal device according to claim 49, **characterized in that**
the processor module is configured for restarting the third timer when triggering the specific behavior during the running of the third timer.

51. The terminal device according to any one of claims 48 to 50, **characterized in that**
the transceiver module is further configured for sending indication information that the specific behavior is triggered to the network device.

52. The terminal device according to any one of claims 45 to 51, **characterized in that**
the processor module is further configured for controlling the counter to add 1 and/or turn on or restart the first timer when a first data packet transmission error is present or is determined.

53. The terminal device according to claim 52, **characterized in that**
the processor module is specifically configured for determining the first data packet transmission error when receiving indication information of a data packet transmission error, or receiving indication information of a retransmission schedule, or not receiving response acknowledgement (ACK) indication information but a second timer expires, or receiving negative acknowledgement (NACK) indication information of the first data packet before the second timer expires, or receiving the indication information of the retransmission schedule of the first data packet before the second timer expires; or no data packet being transmitted correctly or successfully within a predetermined time period.

54. The terminal device according to any one of claims 48 to 50, **characterized in that** the processor module is further configured for performing one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 when the first timer is reset;
stopping the first timer and/or resetting the counter to 0 when the counter is reset;
performing at least one of stopping the first timer, stopping the third timer, and resetting the counter to 0 when the third timer is rest; and
performing at least one of stopping the first timer, stopping the second timer, stopping the third timer, and resetting the counter to 0 when the second timer is rest.

55. The terminal device according to any one of claims 36 to 54, **characterized in that**
the transceiver module is specifically configured for receiving the first parameter sent by the network device through dedicated information, wherein the dedicated information comprises radio resource control (RRC), medium access control control element (MAC CE), or downlink control information (DCI), or
the transceiver module is specifically configured for receiving the first parameter sent by the network device in a broadcast, unicast, or multicast manner.

56. The terminal device according to any one of claims 36 to 55, **characterized in that**
the transceiver module is further configured for receiving first information sent by the network device, and
the processor module is further configured for determining to trigger the first behavior according to the first parameter according to the first information.

57. The terminal device according to claim 56, **characterized in that**
the transceiver module is specifically configured for receiving the first information sent by the network device through the dedicated information, wherein the dedicated information comprises radio resource control (RRC), medium access control control element (MAC CE), or downlink control information (DCI), or
the transceiver module is specifically configured for receiving the first information sent by the network device in a broadcast, unicast, or multicast manner.

58. A network device, **characterized by** comprising:
a transceiver module, configured for sending a first parameter to a network device, wherein the first parameter is used by the terminal device to trigger a first behavior, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

59. The network device according to claim 58, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

60. The network device according to claim 59, **characterized in that** the used transmission parameter comprises: at least one of a used modulation and coding scheme (MCS), the number of times of used repeated transmission, or the number of times of used duplicate transmission.

61. The network device according to claim 59 or 60, **characterized in that** the used transmission parameter is adjusted by the terminal device or is pre-configured or instructed by the network device.

62. The network device according to any one of claims 59 to 61, vs the activated duplicate transmission mode is a terminal device level, a quality-of-service flow level, or a data packet level.

63. The network device according to claim 62, **characterized in that** the activated duplicate transmission mode which is the terminal device level, the quality-of-service flow level, or the data packet level is pre-configured or instructed by the network device.

64. The network device according to any one of claims 58 to 63, **characterized in that**
the related information of the counter comprises at least one of the following: an initial value of the counter and a maximum threshold, and
the related information of the first timer comprises a time period of the first timer.

65. The network device according to any one of claims 58 to 64, **characterized in that** the related information of the counter and the related information of the first timer are determined by the network device according to at least one of survival time and a data delay.

66. The network device according to any one of claims 58 to 65, **characterized in that** the network device further comprises: a processor module,
the transceiver module is further configured for receiving the first indication information reported by the terminal device, and
the processor module is configured for determining a second behavior according to the first indication information.

67. The network device according to any one of claims 58 to 65, **characterized in that**
the transceiver module is further configured for receiving indication information that the specific behavior is triggered sent by the terminal device.

68. The network device according to any one of claims 58 to 67, **characterized in that**
the transceiver module is specifically configured for sending the first parameter to the terminal device through dedicated information, wherein the dedicated information comprises radio resource control (RRC), medium access control control element (MAC CE), or downlink control information (DCI), or
the transceiver module is specifically configured for sending the first parameter to the terminal device in a broadcast, unicast, or multicast manner.

69. The network device according to any one of claims 58 to 68, **characterized in that**
the transceiver module is further configured for sending first information to the terminal device, wherein the first information is used by the terminal device to determine to trigger the first behavior according to the first parameter.

70. The network device according to claim 69, **characterized in that**
the transceiver module is specifically configured for sending the first information to the terminal device through the dedicated information, wherein the dedicated information comprises radio resource control (RRC), medium access control control element (MAC CE), or downlink control information (DCI), or
the transceiver module is specifically configured for sending the first information to the terminal device in a broadcast, unicast, or multicast manner.

71. A terminal device, **characterized by** comprising:
a transceiver, configured for receiving a first parameter sent by a network device, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

72. The terminal device according to claim 71, **characterized in that** the terminal device further comprises:
a processor, configured for triggering a first behavior according to the first parameter.

73. The terminal device according to claim 72, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

74. The terminal device according to claim 73, **characterized in that** the used transmission parameter comprises: at least one of a used modulation and coding scheme (MCS), the number of times of used repeated transmission, or the number of times of used duplicate transmission.

75. The terminal device according to claim 73 or 74, **characterized in that** the used transmission parameter is adjusted by the terminal device or is pre-configured or instructed by the network device.

76. The terminal device according to any one of claims 73 to 75, **characterized in that** the activated duplicate transmission mode is a terminal device level, a quality-of-service flow level, or a data packet level.

77. The terminal device according to claim 76, **characterized in that** the activated duplicate transmission mode which is the terminal device level, the quality-of-service flow level, or the data packet level is pre-configured or instructed by the network device.

78. The terminal device according to any one of claims 71 to 77, **characterized in that**
the related information of the counter comprises at least one of the following: an initial value of the counter and a maximum threshold, and
the related information of the first timer comprises a time period of the first timer.

79. The terminal device according to any one of claims 71 to 78, **characterized in that** the related information of the counter and the related information of the first timer are determined by the network device according to at least one of survival time and a data delay.

80. The terminal device according to any one of claims 71 to 79, **characterized in that**
the processor is specifically configured for triggering the transceiver to report the first indication information to the network device when a current value of the counter is greater than or equal to the maximum threshold, wherein the first indication information is used by the network device to determine a second behavior.

81. The terminal device according to claim 80, **characterized in that** the first indication information comprises indication information of at least one object, and the first object comprises the at least one object.

82. The terminal device according to claim 81, **characterized in that** the first object is an object corresponding to a first identifier, the at least one object is at least one object corresponding to at least one identifier, and the first identifier comprises the at least one identifier.

83. The terminal device according to any one of claims 71 to 79, **characterized in that**
the processor is specifically configured for triggering the specific behavior when a current value of the counter is greater than or equal to the maximum threshold.

84. The terminal device according to claim 83, **characterized in that** the first parameter further comprises related information of a third timer,
the processor is further configured for turning on the third timer when triggering the specific behavior and resuming a third behavior before the specific behavior when the third timer expires.

85. The terminal device according to claim 84, **characterized in that**
the processor is further configured for restarting the third timer when triggering the specific behavior during the running of the third timer.

86. The terminal device according to any one of claims 83 to 85, **characterized in that**
the transceiver is further configured for sending indication information that the specific behavior is triggered to the network device.

87. The terminal device according to any one of claims 80 to 86, **characterized in that**
the processor is further configured for controlling the counter to add 1 and/or turn on or restart the first timer when a first data packet transmission error is present or is determined.

88. The terminal device according to claim 87, **characterized in that**
the processor is specifically configured for determining the first data packet transmission error when the terminal device receives indication information of a data packet transmission error, or receives indication information of a retransmission schedule, or does not receive response acknowledgement (ACK) indication information but a second timer expires, or receive negative acknowledgement (NACK) indication information of the first data packet before the second timer expires, or receive the indication information of the retransmission schedule of the first data packet before the second timer expires, or no data packet is transmitted correctly or successfully within a predetermined time period.

89. The terminal device according to any one of claims 83 to 85, **characterized in that** the processor is further configured for performing one of the following:
resetting the first timer and/or resetting the counter to 0 when the first timer expires;
resetting the first timer and/or resetting the counter to 0 when a data packet which is correctly transmitted is present during the running of the first timer;
resetting the first timer and/or resetting the counter to 0 when a data packet transmission error is not present during the running of the first timer;
stopping the first timer and/or resetting the counter to 0 when the first timer is reset;
stopping the first timer and/or resetting the counter to 0 when the counter is reset;
performing at least one of stopping the first timer, stopping the third timer, and resetting the counter to 0 when the third timer is rest; and
performing at least one of stopping the first timer, stopping the second timer, stopping the third timer, and resetting the counter to 0 when the second timer is rest.

90. The terminal device according to any one of claims 71 to 89, **characterized in that**
the transceiver is specifically configured for receiving the first parameter sent by the network device through dedicated information, wherein the dedicated information comprises radio resource control (RRC), medium access control control element (MAC CE), or downlink control information (DCI), or
the transceiver is specifically configured for receiving the first parameter sent by the network device in a broadcast, unicast, or multicast manner.

91. The terminal device according to any one of claims 71 to 90, **characterized in that**
the transceiver is further configured for receiving first information sent by the network device, and
the processor is further configured for determining to trigger the first behavior according to the first parameter according to the first information.

92. The terminal device according to claim 91, **characterized in that**
the transceiver is specifically configured for receiving the first information sent by the network device through the dedicated information, wherein the dedicated information comprises radio resource control (RRC), medium access control control element (MAC CE), or downlink control information (DCI), or
the transceiver is specifically configured for receiving the first information sent by the network device in a broadcast, unicast, or multicast manner.

93. A network device, **characterized by** comprising:
a transceiver, configured for sending a first parameter to a network device, wherein the first parameter is used by the terminal device to trigger a first behavior, wherein the first parameter comprises at least one of the following: related information of a counter corresponding to a first object and related information of a first timer, and the first object comprises at least one of a terminal device, a bearer, a quality-of-service flow, a data packet, a packet data unit session (PDU session), and a time-sensitive communication stream (TSC stream).

94. The network device according to claim 93, **characterized in that** the first behavior comprises: reporting at least one of first indication information and a specific behavior, wherein the specific behavior comprises: at least one of selecting a resource for priority transmission, adjusting a logical channel mapping restriction, adjusting a logical channel mapping parameter, selecting the logical channel mapping parameter, selecting a used transmission parameter, and selecting an activated duplicate transmission mode.

95. The network device according to claim 94, **characterized in that** the used transmission parameter comprises: at least one of a used modulation and coding scheme (MCS), the number of times of used repeated transmission, or the number of times of used duplicate transmission.

96. The network device according to claim 94 or 95, **characterized in that** the used transmission parameter is adjusted by the terminal device or is pre-configured or instructed by the network device.

97. The network device according to any one of claims 94 to 96, **characterized in that** the activated duplicate transmission mode is a terminal device level, a quality-of-service flow level, or a data packet level.

98. The network device according to claim 97, **characterized in that** the activated duplicate transmission mode which is the terminal device level, the quality-of-service flow level, or the data packet level is pre-configured or instructed by the network device.

99. The network device according to any one of claims 93 to 98, **characterized in that**
the related information of the counter comprises at least one of the following: an initial value of the counter and a maximum threshold, and
the related information of the first timer comprises a time period of the first timer.

100. The network device according to any one of claims 93 to 99, **characterized in that** the related information of the counter and the related information of the first timer are determined by the network device according to at least one of survival time and a data delay.

101. The network device according to any one of claims 93 to 100, **characterized in that** the network device further comprises: a processor,
the transceiver is further configured for receiving the first indication information reported by the terminal device, and
the processor is configured for determining a second behavior according to the first indication information.

102. The network device according to any one of claims 93 to 100, **characterized in that**
the transceiver is further configured for receiving indication information that the specific behavior is triggered sent by the terminal device.

103. The network device according to any one of claims 93 to 102, **characterized in that**
the transceiver is specifically configured for sending the first parameter to the terminal device through dedicated information, wherein the dedicated information comprises radio resource control (RRC), medium access control control element (MAC CE), or downlink control information (DCI), or
the transceiver is specifically configured for sending the first parameter to the terminal device in a broadcast, unicast, or multicast manner.

104. The network device according to any one of claims 93 to 103, **characterized in that**
the transceiver is further configured for sending first information to the terminal device, wherein the first information is used by the terminal device to determine to trigger the first behavior according to the first parameter.

105. The network device according to claim 104, **characterized in that**
the transceiver is specifically configured for sending the first information to the terminal device through dedicated information, wherein the dedicated information comprises radio resource control (RRC), medium access control control element (MAC CE), or downlink control information (DCI), or
the transceiver is specifically configured for sending the first information to the terminal device in a broadcast, unicast, or multicast manner.

106. A computer-readable storage medium, comprising an instruction, wherein the computer-readable storage medium causes a computer to execute the method according to any one of claims 1 to 22 or claims 23-35 when running on the computer.
